# EUROPÄISCHE PATENTSCHRIFT

(11) **EP 0 394 869 B1**
(45) Veröffentlichungstag und Bekanntmachung des Hinweises auf die Patenterteilung: **11.01.1995**
(21) Anmeldenummer: 90107533.3
(22) Anmeldetag: 20.04.1990
(51) Int. Cl.: G05D 9/12

(54) **Verfahren zur Regelung des Füllstandes einer aus mindestens zwei Komponenten bestehenden Mischung aus riesel- und/oder fliessfähigem Material in einem mit einem Abzug versehenen Behälter**
Method for controlling the level of a mixture consisting of at least two components of fluid material in a container with an outlet
Procédé de commande de niveau d'un mélange consistant au moins de deux fluides à l'intérieur d'un récipient muni d'une sortie

(30) Priorität: 26.04.1989 DE 3913808
(43) Veröffentlichungstag der Anmeldung: 31.10.1990
(73) Patentinhaber: Windmöller & Hölscher, D-49525 Lengerich (DE)
(72) Erfinder: Saatkamp, Richard, Dipl.-Ing., D-4540 Lengerich (DE)
(74) Vertreter: Gossel, Hans K., Dipl.-Ing.

(56) Entgegenhaltungen:
- DE-A- 3 636 381
- DE-A- 3 736 713
- DE-B- 2 229 171

## Beschreibung

Die Erfindung betrifft ein Verfahren zur Regelung des Füllstandes einer aus mindestens zwei Komponenten bestehenden Mischung aus riesel- und/oder fließfähigem Material in einem mit einem Abzug versehenen Behälter, zur Regelung des Füllstandes in dem Aufgabetrichter eines Extruders, bei dem der Füllstand durch mindestens eine Fühleinrichtung erfaßt wird, die die zugegebene Menge pro Zeiteinheit mindestens einer Komponente steuert.

Bei vielen Mischungsverfahren, insbesondere bei der Beschickung des Aufgabetrichters eines Extruders mit Kunststoffgranulat, ist es erforderlich, das Material in einer Menge zuzuführen, daß der mittlere Füllstand in dem Behälter bzw. dem Aufgabetrichter mit möglichst geringen Änderungsschwankungen trotz des ständigen und in der Regel kontinuierlichen Abzugs von Material aus diesem aufrechterhalten bleibt. Es bedeutet ein besonderes Problem, diesem Erfordernis gerecht zu werden, wenn dem Behälter bzw. Aufgabetrichter zusätzlich ständig eine weitere Komponente mit im wesentlichen gleicher Menge zugeführt wird.

Bei der Herstellung von Flachbahnen aus thermoplastischem Kunststoff werden üblicherweise die Ränder extrudierter Flachbahnen beidseitig besäumt, und die dabei als Abfall anfallenden Randstreifen werden einem Häckselwerk zugeführt und in diesem zerkleinert. Von diesem werden die gehäckselten Randstreifen durch ein Gebläse in den Aufgabetrichter eines Extruders geblasen, in dem sich dann die Randstreifen mit dem zugeführten Granulat vermischen. Die Komponenten der Mischung sollen in ihrem Verhältnis zueinander nun möglichst konstant sein, um eine homogene Masse extrudieren zu können, deren Komponenten sich auch über die Zeit möglichst nicht ändern.

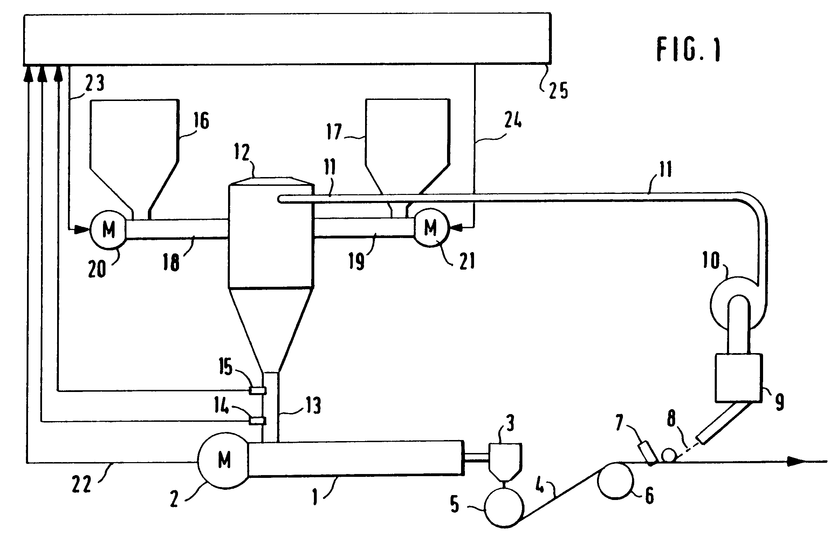

Anhand der Fig. 1 der Zeichnung wird eine bekannte Extrusionsanlage beschrieben, der Granulat und gehäckselte Randstreifen einer extrudierten Flachbahn zugeführt werden. Die Schnecke eines üblichen Extruders 1 wird durch einen Antriebsmotor 2 angetrieben.

Die über eine Breitschlitzdüse 3 extrudierte Flachbahn 4 gelangt über eine Kühlwalze 5 und eine Umlenkwalze 6 zur Besäumeinrichtung 7. Die beidseitig von der Flachbahn 4 abgetrennten Randstreifen 8 gelangen zu einem Häckselwerk 9 und von dort über ein Gebläse 10 und eine Rohrleitung 11 weiter zum Aufgabetrichter des Extruders 1. Wie die Zeichnung erkennen läßt, ist der Trichter 12 über ein zylindrisches Halsstück 13 mit dem Extruder fest verbunden. An diesem Halsstück sind zwei Fühler 14 und 15 mit Abstand zueinander angeordnet, über die die Füllstandshöhe des vom Extruder aufzuschmelzenden Materials ermittelt wird. Dieses Material besteht, wie schon erwähnt, zum geringen Teil aus gehäckselten Randstreifen. Der weitaus größere Teil ist gebildet aus Granulat, wobei eine Granulatsorte über den am Haupttrichter angeschlossenen Dosiertrichter 16 und eine andere Granulatsorte über den Dosiertrichter 17 zugeführt wird, wobei letzterer ebenfalls mit dem Trichter 12 verbunden ist. Die Zufuhr geschieht dabei über Dosierschnecken 18 und 19, die jeweils von Motoren 20 und 21 angetrieben werden. Sowohl vom Hauptantriebsmotor 2 als auch von den Motoren 20 und 21 führen Steuerleitungen 22, 23 und 24 zum Regelgerät 25, über das die Motoren 20 und 21 in Abhängigkeit vom Antriebsmotor 2 gesteuert werden, das heißt: Wird der Extruder 1 mit einer höheren Leistung und damit mit höherer Drehzahl des Antriebsmotors 2 gefahren, wird auch die Drehzahl der Motoren 20 und 21 der Dosiertrichter 16 und 17 mit erhöhter Drehzahl gefahren. Wie schon erwähnt, wird die Füllstandshöhe im zylindrischen Halsstück 13 über Fühler 14 und 15 gesteuert. Das geschieht derart, daß über die Dosiertrichter 16 und 17 Granulat zusammen mit den gehäckselten Randstreifen so lange mit gegenüber dem Extruder 1 erhöhter Produktmenge zugeführt wird, bis der Fühler 15 die Produktmenge ertastet. In diesem Moment werden die beiden Motoren 20 und 21 der Dosiertrichter 16 und 17 abgeschaltet, und zwar so lange, bis das Material im Halsstück 13 auf einen Pegel abgesunken ist, der vom Fühler 14 ertastet wird. Während dieser Zeit wird allerdings über die Leitung 11 kontinuierlich gehäckseltes Randstreifenmaterial zugeführt. Dies bedeutet, daß über einen kurzen Zeitraum dem Extruder 1 ausschließlich gehäckseltes Randstreifenmaterial zugeführt wird. Die Zufuhr dieses lockereren Randstreifen-Haufenwerks zum Extruder bedeutet aber eine Druckschwankung im Extruder und ein Pumpen des Materials. Diese Druckschwankung und dieses Pumpen des Materials machen sich durch sichtbare Streifen in der extrudierten Flachbahn bemerkbar.

Aufgabe der Erfindung ist es daher, ein Verfahren vorzuschlagen, bei dem trotz der Zuführung einer Komponente mit im wesentlichen gleicher Menge und mindestens einer weiteren Komponente entsprechend dem Füllstand mit unterschiedlicher Menge pro Zeiteinheit das Mischungsverhältnis aller abgezogenen Komponenten über die Zeit im wesentlichen konstant bleibt.

Diese Aufgabe wird erfindungsgemäß durch die kennzeichnenden Merkmale des Patentanspruchs 1 gelöst.

Aus DE-A-22 29 171 ist ein Verfahren zum Konstanthalten des Füllstandes von erhitztem Fördergut, insbesondere Kunststoffmaterial, bekannt, das in einem von einer Arbeitsmaschine gespeisten Behälter entgast wird und dann durch Füllstandsregelung aus dem Behälter austritt. Um nach diesem bekannten Verfahren einen bestimmten, wählbaren Füllstand in einem evakuierten Behälter konstant zu halten, wird die im wesentlichen durch Wärmestrahlung des Fördergutes an einer geeigneten Meßstelle im Innern des Behälters vorliegende Temperatur als ein dem Füllstand adäquater Istwert kontinuierlich gemessen und dieser Istwert mit einem vorgegebenen, einer wählbaren Füllstandshöhe adäquaten Sollwert verglichen, wobei abhängig vom Differenzwert ein kontinuierliches Ausgangssignal erzeugt wird, durch das eine Drehzahländerung der Arbeitsmaschine herbeigeführt und die Füllstandshöhe durch kontinuierliches Ändern der Fördermenge konstant gehalten wird.

Werden dem Behälter oder Aufgabetrichter mindestens zwei Komponenten über diese aus deren Vorratsbehältern abziehende Dosierschnecken zugeführt, laufen deren Motoren bei allen entsprechend dem Füllstand geänderten Drehzahlen mit einem festen, dem Mischungsverhältnis entsprechenden Drehzahlverhältnis. Durch diese Maßnahme ist sichergestellt, daß das Mischungsverhältnis, das aufgrund des Drehzahlverhältnisses der Motoren vorgegeben ist, auch dann konstant bleibt, wenn diese zur Füllstandsänderung mit unterschiedlichen Drehzahlen laufen.

Um zur Einregelung auf den mittleren Füllstand abrupte Drehzahländerungen zu vermeiden, erfolgen die Drehzahländerungen der Motoren der Dosierschnecken zweckmäßigerweise mit im wesentlichen konstanter Beschleunigung.

Bei den beschriebenen Mischungsverfahren kann es erforderlich sein, in regelmäßigen Abständen zu prüfen, ob das gewünschte Mischungsverhältnis auch tatsächlich eingehalten wird.

Zur Prüfung des genauen Mischungsverhältnisses der in einen Behälter oder einen Aufgabetrichter eingespeisten Komponenten ist daher nach einer erfinderischen Weiterbildung vorgesehen, daß diese Komponenten über eine vorbestimmte Meßzeit in Meßbehälter geleitet werden. Um diese Messung vornehmen zu können, können die von den Dosierschnecken zu dem Behälter bzw. dem Aufgabetrichter eines Extruders führenden Leitungen mit zu den Meßbehältern führenden Zweigleitungen versehen sein, die durch automatisch betätigbare Schieber verschließbar sind. Das erfindungsgemäße Meßverfahren gestattet es somit, auch während des laufenden Betriebes das Mischungsverhältnis mehrerer Komponenten genau zu prüfen. Dabei wird die Meßzeit ausreichend lang, aber im ganzen nur so kurz bemessen, daß sich die während der Meßzeit erfolgte Entleerung des Behälters bzw. Aufgabetrichters bzw. die Abweichung von dem mittleren Füllstand nach den vorstehend beschriebenen Regelverfahren ohne sprunghafte Drehzahländerungen langsam wieder auf den mittleren Füllstand zurückführen läßt.

Zweckmäßigerweise wird der mittlere Füllstand von einem Fühler erfaßt, dessen Signal bei absinkendem Füllstand die zugeführte Menge pro Zeiteinheit der zu mischenden Komponenten mit stetiger Geschwindigkeitszunahme steigert und bei steigendem Füllstand mit stetiger Geschwindigkeitszunahme vermindert.

Der Füllstand kann durch mehrere Fühler, die unterschiedlichen Füllständen zugeordnet sind, erfaßt werden, wobei die von den Fühlern abgegebenen Signale entsprechend abgestuft die Drehzahlen der Motoren der Dosierschnecken steuern.

Nach einer weiteren vorteilhaften Ausgestaltung ist vorgesehen, daß die Zeiten der Füllstandsänderungen zwischen einem oberen und einem unteren Niveau gemessen und aus diesen Zeiten die Drehzahlen der Dosierschneckenmotoren zur Einhaltung des mittleren Füllstandes errechnet werden.

Zweckmäßigerweise werden die Drehzahlen der Dosierschneckenmotoren proportional zu den Drehzahlen der Extruderschnecke geändert, so daß Änderungen des Abzuges von Material aus dem Aufgabetrichter infolge veränderter Drehzahlen der Extruderschnecke nicht zu einer Veränderung des mittleren Füllstandes in dem Aufgabetrichter führen.

Neben der kontinuierlich zugeführten Komponente oder den kontinuierlich zugeführten Randstreifen können mindestens zwei weitere Komponenten mit konstantem Mischungsverhältnis in veränderlicher Menge pro Zeiteinheit zugeführt werden.

Nach dem erfindungsgemäßen Verfahren pendelt die Zuführungsgeschwindigkeit der mindestens einen weiteren Komponente um den mittleren Füllstand in der Weise, daß die Zuführungsgeschwindigkeit geringfügig gesteigert wird, wenn der Fühler einen unter den mittleren Füllstand absinkenden Füllstand mißt, so daß sich der Behälter oder ein Teil des Behälters wieder stärker füllt, bis der Füllstand erneut den mittleren Füllstand übersteigt. Auf ein entsprechendes Signal des Fühlers hin wird die Zuführungsgeschwindigkeit kontinuierlich abgesenkt, so daß der Füllstand wieder unter den mittleren Füllstand absinkt und auf ein entsprechendes Signal des Fühlers hin die Zuführungsgeschwindigkeit wieder gesteigert wird. Das erfindungsgemäße Verfahren schafft somit eine Füllungsregelung, ohne daß sich das Mischungsverhältnis der zugeführten Komponenten in einem praktisch erheblichen Ausmaß ändert.

Soll das Mischungsverhältnis der beispielsweise dem Randstreifenhäcksel zugemischten Komponenten gemessen werden, wird zweckmäßigerweise die Zuführung der kontinuierlich zugeführten Menge während der Meßzeit unterbrochen.

Ausführungsbeispiele der Erfindung werden nachstehend anhand der Zeichnung näher erläutert.

In dieser zeigt
Fig.2 in schematischer Darstellung eine Anlage zur Herstellung von extrudierten Flachfolien aus thermoplastischem Material,
Fig.3 eine der Fig.2 entsprechende Darstellung mit einem abweichenden Verfahren zur Regelung der Füllstandshöhe,
Fig.4 eine den Fig.2 und 3 entsprechende Darstellung mit einem dritten Verfahren zur Regelung der Füllstandshöhe und
Fig.5 eine den vorhergehenden Figuren entsprechende Darstellung mit einem vierten Verfahren zur Regelung der Füllstandshöhe.

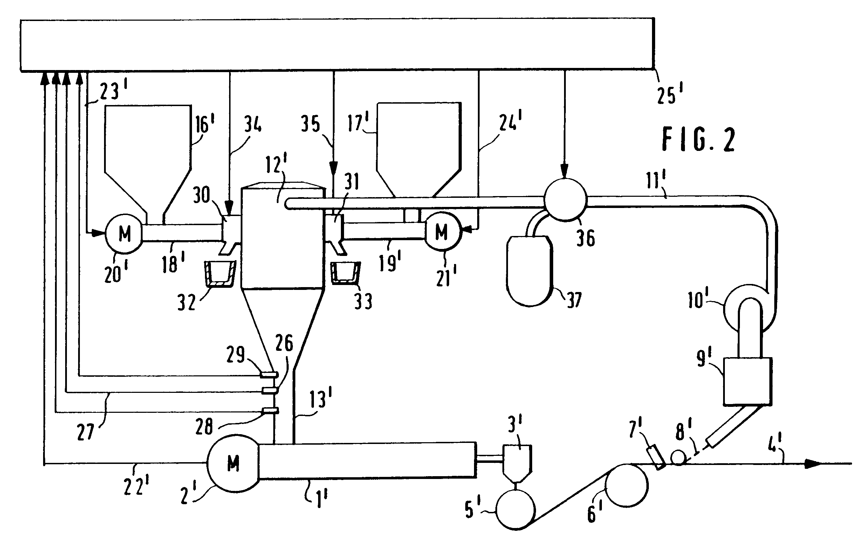

Bei der aus Fig.2 ersichtlichen Anlage sind den Dosierschnecken 18′ und 19′ Absperrschieber 30,31 zugeordnet, die so ausgebildet sind, daß das Granulat in Sperrstellung dieser beiden Schieber statt zum Aufgabetrichter 12′ in Behälter 32 und 33 gelangt. Diese Absperrschieber 30 und 31 werden vom Regelgerät 25′ über Steuerleitungen 34 und 35 beispielsweise turnusgemäß im Abstand von zwei Stunden oder nach einem Wechsel des Granulats gleichzeitig über einen Zeitraum von 30 Sekunden betätigt, so daß 30 Sekunden lang das von den Dosierschnecken 18′ und 19′ zugeführte Granulat in die Behälter 32 und 33 gelangt. Danach werden dann die Absperrschieber 30 und 31 wieder umgesteuert, so daß das Granulat dem Aufgabetrichter 12′ zugeführt wird. Die Bedienungsperson kann dann, ohne die Anlage stillsetzen zu müssen, anhand des in den Behältern 32 und 33 vorhandenen Materials die genaue Durchsatzmenge ermitteln. Um nun zu verhindern, daß sich während der Probeentnahme das Mischungsverhältnis zwischen Granulat und Randstreifenhäckselmaterial ändert, wird auch das Randstreifenmaterial für die Zeit, in der Granulat in die Behälter 32 und 33 gelangt, über eine Rohrweiche 36 beispielsweise in einen angehängten Beutel 37 geführt. Zum Zwecke der Probeentnahme kann, über das Regelgerät 25′ bestimmt, der Materialpegel im zylindrischen Halsstück 13′ bis zum Alarmfühler 29 hochgefahren werden, so daß gewährleistet ist, daß im Halsstück 13′ genügend Material vorhanden ist, um den Extruder 1′ während der Probeentnahme kontinuierlich mit Material zu versorgen. Die Fühler 26, 28,29 sind sogenannte kapazitive Fühler, deren Empfindlichkeit über einen Potentiometer einstellbar ist, so daß die Fühler nur von einer im Halsstück 13′ stehenden Materialsäule beeinflußt werden, nicht aber von dem Material, das in das Halsstück 13′ hineinrieselt.

Die Fühler 28,29 sind Fühler, die Grenz-Füllstände erfassen und Alarmsignale auslösen können. Bei dem anhand der Fig.2 beschriebenen Verfahren werden die Motore 20′,21′ nicht aus- bzw. eingeschaltet, sondern in ihrer Drehzahl in der Weise verändert, daß die von den Dosierschnecken 18′ und 19′ zugeführte Fördermenge im Wechsel geringfügig erhöht bzw. verringert wird. Dabei pendelt die Füllstandshöhe im zylindrischen Halsstück 13′ um den kapazitiven Fühler 26. Das Mischungsverhältnis des Materials, das dem Extruder 1′ zugeführt wird, bleibt demnach nahezu konstant.

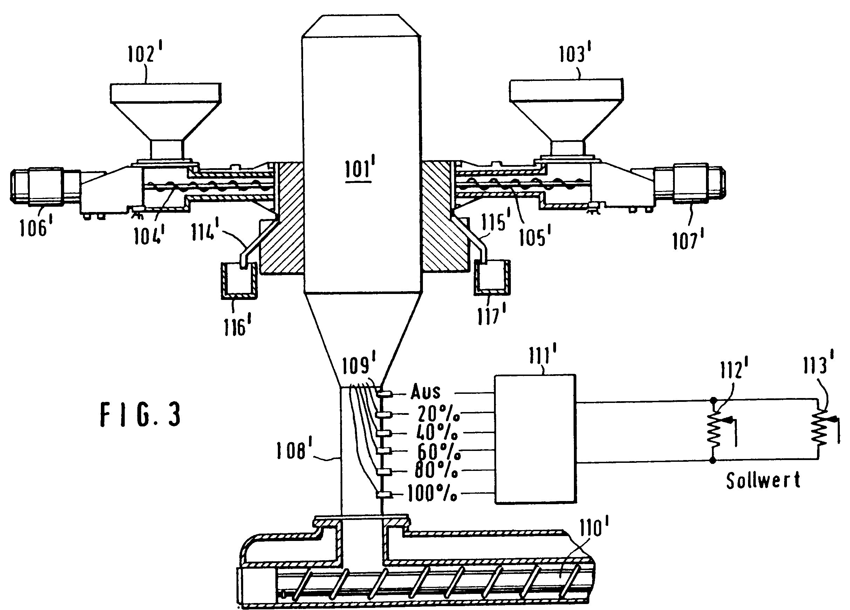

Anhand der Fig.3 wird nun ein weiteres Füllstandsregelungsverfahren erläutert. In einen Haupttrichter 101′ wird Granulat von zwei Dosiertrichtern 102′ und 103′ eingebracht, und zwar über entsprechende Schnecken 104′ und 105′, die über Motore 106′ und 107′ angetrieben werden. Aus Fig.3 ist weiterhin zu erkennen, daß der Haupttrichter 101′, ein Halsstück 108′ aufweist, das mit insgesamt sechs Initiatoren besetzt ist. Diese Initiatoren sind insgesamt mit 107′ bezeichnet. Das Granulat fließt in bekannter Weise aus dem Halsstück 108′ in eine Extruder 110′. Dieser Extruder wird im wesentlichen mit konstanter Drehzahl betrieben. Alle Initiatoren 109′ sind mit einer Steuereinrichtung 111′ verbunden, über die die Drehzahl der Motoren 106′ und 107′ gesteuert wird. Um dies realisieren zu können, ist es vorab aber erforderlich, daß die den Motoren 106′ und 107′ zugeordneten Potentiometer 112′ und 113′ so eingestellt sind, daß die Drehzahlen der Motoren 106′ und 107′ zueinander dem Mischungsverhältnis entsprechen, und zwar in Abstimmung auf die eingesetzten Dosierschnecken 104′ und 105′. Ist diese Grundeinstellung der Potentiometer 112′ und 113′ einmal vorgenommen, wird das Halsstück 108′ zu Arbeitsbeginn zunächst über die Motoren 106′ und 107′ so weit gefüllt, bis der Füllstand den oberen Initiator (aus) erreicht hat, durch den die Motoren 106′ und 107′ komplett ausgeschaltet werden. Sobald nun der Extruder 110′ aus dem Halsstück 108′ Material so weit abgezogen hat, daß die Füllstandshöhe den zweiten Initiator (20%) erreicht hat, werden die Motoren 106′ und 107′ eingeschaltet, und zwar mit einer Drehzahl, die 20% ihrer maximal an den Potentiometer 112′ und 113′ eingestellten Drehzahl beträgt. Ist diese Drehzahl ausreichend, um den Extruder 110′ ständig mit genügend Material zu versorgen, ohne daß die Füllstandshöhe im Halsstück 108′ absackt, werden die Motoren 106′ und 107′ ständig mit dieser Drehzahl betrieben. Sackt nun aber die Füllstandshöhe im Halsstück 108′ weiter ab, erreicht sie zunächst den von oben gesehenen dritten Initiator (40%), woraufhin dann die Drehzahlen der Motoren 106′ und 107′ erhöht werden, und zwar auf 40% ihrer an den Potentiometer 112′ und 113′ eingestellten maximalen Drehzahl. Sollte diese Drehzahl zu hoch sein, steigt der Füllstand im Halsstück 108′ wieder an und erreicht den von oben gesehenen zweiten Initiator (20%). Dies bedeutet mit anderen Worten, daß die Drehzahlen der Motoren 106′ und 107′ ständig entweder mit 20% oder mit 40% ihrer maximalen Drehzahlen (eingestellt an den Potentiometern 112′ und 113′) betrieben werden. Die Motoren 106′ und 107′ machen also während des Betriebes maximal Drehzahlstufen von 20%. Man könnte statt sechs Initiatoren beliebig viele einsetzen, so daß die Drehzahlstufen noch geringer werden. Auf jeden Fall muß aber gewährleistet sein, daß die beiden Motoren 106′ und 107′ bei Höchstdrehzahl (100% der an den Initiatoren 112′ und 113′ eingestellten Drehzahlen) stets mehr Material fördern als von dem Extruder 110′ verarbeitet werden kann.

Aus der Figur 3 ist weiterhin zu erkennen, daß jeder Schnecke 104′ bzw. 105′ ein Auslaß 114′ bzw. 115′ zugeordnet ist mit zwei diesen Auslässen 115′ und 114′ zugeordneten Schiebern, so daß der von den Schnecken 104′ und 105′ geförderte Granulatstrom wahlweise in den Haupttrichter 101′ oder aber den Auslässen 114′ und 115′ zugeführt werden kann. Diese bedeutet, daß während des Betriebes in vorbestimmten oder nicht vorbestimmten Abständen die Granulatströme so umgeleitet werden können, daß sie für einen bestimmten Zeitraum Granulat in die Meßtöpfe 116′ und 117′ fördern, und zwar zeitgleich. Das Mischungsverhältnis wird während dieser Phase nicht beeinflußt, da die Schnecken 104′ und 105′ ja mit ihrer zum Zeitpunkt der Probeentnahme laufenden Drehzahl weiterbetrieben werden. Aus den beiden gezogenen Granulatproben kann das gravimetrische Mischungsverhältnis bestimmt werden und, falls dieses nicht mit dem Sollwert übereinstimmt, die Drehzahlen der Schnecken 104′ und 105′ zueinander über die Potentiometer 112′ und 113′ entsprechend verändert werden.

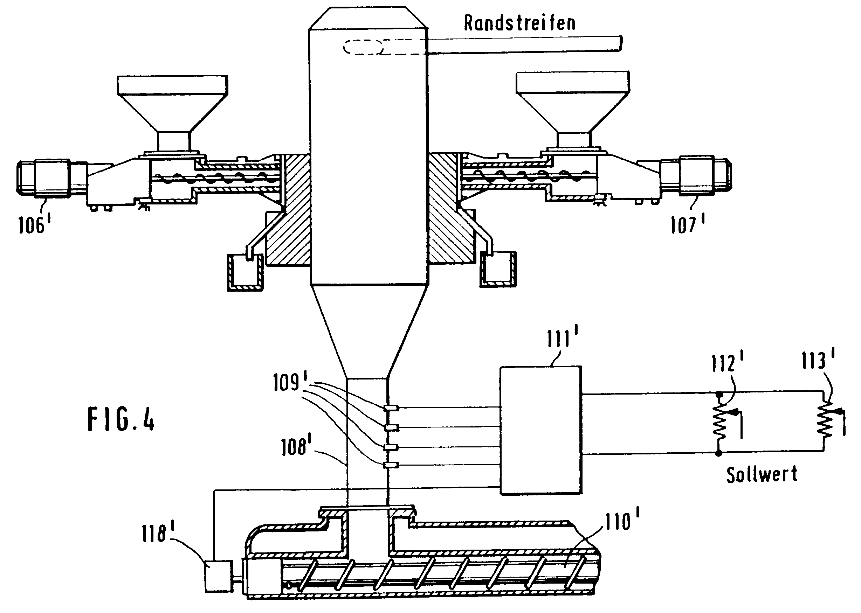

Während die Füllstandsregulierung nach Figur 3 mit absoluten fest eingestellten Drehzahlstufen und unabhängig davon arbeitet, ob der Extruder 110′ betrieben wird oder nicht, zeigt die Figur 4 eine Steuerung, bei der die Motoren 106′ und 107′ in Abhängigkeit von der Drehzahl des Extruders 110′ betrieben werden, d.h. sobald der Extruder 110′ läuft, laufen auch die Dosierschneckenmotoren 106′ und 107′. Zu diesem Zweck ist mit der Schnecke des Extruders 110′ ein Tachogenerator 118′ verbunden, der mit der Steuereinrichtung 111′ in Verbindung steht. Mit dieser sind auch die vier Initiatoren 109′ verbunden. Über diese Initiatoren wird die Drehzahl der Motoren 106′ und 107′ erhöht bzw. verringert, aber nicht unbedingt immer um die gleichen Drehzahlstufen. Diese Drehzahlstufen sind nämlich im Auisführungsbeispiel nach Figur 4 abhängig von der Drehzahl, mit der der Extruder 110′ betrieben wird. Wird beispielsweise der Extruder 110′ nur mit 50% seiner maximalen Drehzahl betrieben, so brauch auch die Dosiermotoren 106′ und 107′ im Mittel nur mit 50% ihrer maximalen an den Potentiometer 112′ und 113′ vorgewählten Drehzahl betrieben zu werden. Diese mittlere Drehzahl der Dosiermotoren 106′ und 107′ wir multiplikativ beeinflußt durch die von den vier dargestellten Initiatoren festgestellten Füllstandshöhe. Der in das Steuergerät 111′ vom Tachogenerator 118′ ausgehende Extruderleitwert wird mit der jeweiligen Füllstandshöhe multipliziert und ergibt dann den Leitwert für die Dosiermotoren 106′ und 107′.

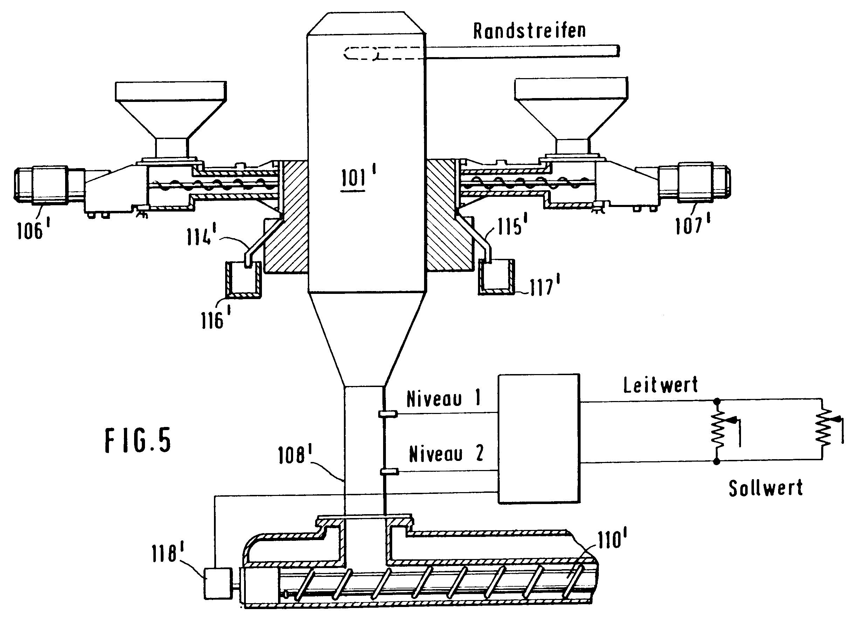

In Figur 5 ist eine Anlage dargestellt, bei der im Halsstück des Haupttrichters 101′ lediglich zwei Initiatoren vorgesehen sind. Diese Initiatoren sind mit einem Regler verbunden, der die Zeiten mißt, in der das Füllstandsniveau einmal vom oberen Initiator zum unteren Initiator hin absackt und ein zweites Mal in der der Füllstand vom unteren Initiator zum oberen hin anwächst. Entsprechend dieser Zeiten werden die Leitwerte korrigiert und die Motoren 106′ und 107′ in ihrer Drehzahl so geregelt, daß die Füllstandshöhe nur ganz langsam absinkt bzw. ganz langsam anwächst. Es sind demzufolge zwei Leitwerte vorhanden, die vom oberen bzw. vom unteren Initiator aktivert werden. Zusätzlich zu dieser Regelung wird die Extruderdrehzahl des Extruders 110′ überwacht, derart, daß bei plötzlich ansteigender Extruderdrehzahl auch die Drehzahlen der Dosiermotoren 106′ und 107′ prozentual angehoben werden, und zwar durch Anpassung der beiden Leitwerte. Dies gilt analog selbstverständlich auch für ein plötzliches Abfallen der Drehzahl des Extruders 110′.

Zum Zwecke der Probeentnahme werden die Drehzahlen der Dosiermotoren 106′ und 107′ auf den mittleren der beiden Leitwerte eingefroren, so daß aus den entnommenen Proben zum einen das gravimetrische Mischungsverhältnis ermittelt werden kann und zum anderen die momentanen tatsächlichen Durchsätze, der beteiligten Materialien. Dies ist möglich, weil die Probeentnahme über einen ganz bestimmten Zeitraum erfolgt und sich aus dieser Zeit und aus dem Gewicht der Probeentnahme die augenblicklichen Durchsätze errechnen lassen.Durch das erfindungsgemäße Verfahren läßt sich auch verhindern, daß durch kurzzeitiges Einschalten der beiden Dosierschneckenmotore und kurzzeitiges Abschalten dieser Motore Veränderungen des Mischungsverhältnisses eintreten. Würde nämlich beispielsweise eine Dosierschnecke 300 kg/h und die andere nur 3kg/h fördern, hätten beide aufgrund der Massenträgheitsmomente der drehenden Teile unterschiedliche Nachlaufzeiten, die zu unterschiedlichen Mischungsverhältnissen führen würden. In entsprechender Weise hätten beide Schnecken unterschiedliche Anlaufzeite, die sich ebenfalls auf das Mischungsverhältnis auswirken würden. Aufgrund der angegebenen Regelungsverfahren werden derartige Schwankungen bei einem vollständigen Stillsetzen und erneutem Anfahren der Dosierschnecken vermieden.

Ist, wie nach dem Ausführungsbeispiel gemäß Fig.2, nur ein den mittleren Füllstand erfassender Fühler 26 vorgesehen, sind geeignete Dämpfungsmaßnahme zu wählen, um ein Überschwingen der Füllstände zu vermeiden.

Nach den erfindungsgemäßen Regelungsverfahren können die Motore der Dosierschnecken in ihrer Drehzahl nur in engen Grenzen schwanken, so daß sich sprunghafte Abweichungen von dem mittleren Füllstand nicht ergeben. Die erfindungsgemäßen Regelungsverfahren setzen voraus, daß die Dosierschnecken nicht direkt in den Extruder, sondern in den diesem vorgeschalteten Zwischenspeicher die Komponenten fördern. Dieser Zwischenspeicher gestattet es zusätzlich, aus den von den Dosierschnecken geförderten Materialströmen Proben zu entnehmen, ohne daß zwischenzeitlich der Zwischenspeicher leerläuft und die Produktion unterbrochen werden müßte.

## Patentansprüche

1. Verfahren zur Regelung des Füllstandes einer aus mindestens zwei Komponenten bestehenden Mischung aus riesel- und/oder fliesfähigem Material in einem mit einem Abzug (13′, 108′) versehenen Behälter (12′, 101′), zur Regelung des Füllstandes in dem Aufgabebehälter (12′, 101′) eines Extruders (1′, 110′), bei dem der Füllstand durch mindestens eine Fühleinrichtung (26, 28, 29) erfaßt wird, die die zugegebene Menge pro Zeiteinheit mindestens einer Komponente steuert,
**dadurch gekennzeichnet,**
daß dem Behälter oder Aufgabetrichter (12′, 101′) mindestens eine Komponente über eine diese aus einem besonderen Vorratsbehälter (16′, 17′, 102′, 103′) abziehende Dosierschnecke (18′, 19′, 104′, 105′) zugeführt wird, deren Motor (20′, 21′, 106′, 107′) aufgrund der Signale der Fühleinrichtung oder der Fühleinrichtungen (26, 28, 29) so gesteuert wird, daß der Füllstand in dem Aufgabetrichter (12′, 101′) dem mittleren Füllstand entspricht oder daß der Füllstand bei Abweichungen von diesem mittleren Füllstand mit möglichst geringen Änderungsdrehzahlen des Motors (20′, 21′, 106′, 107′) wieder auf den mittleren Füllstand zurückgeführt wird, und
daß mindestens eine Komponente im wesentlichen kontinuierlich dem Behälter (12′, 101′) zugeführt wird oder kontinuierlich durch Besäumschnitte abgetrennte und gehäckselte Randstreifen einer extrudierten Flachfolie dem Aufgabetrichter des Extruders zugeführt werden.

2. Verfahren nach Anspruch 1, dadurch gekennzeichnet, daß dem Behälter oder Aufgabetrichter (12′, 101′) mindestens zwei Komponenten über diese aus deren Vorratsbehältern abziehende Dosierschnecken (18′, 19′, 104′, 105′) zugeführt werden, deren Motoren (20′, 21′, 106′, 107′) bei allen entsprechend dem Füllstand geänderten Drehzahlen mit einem festen, dem Mischungsverhältnis entsprechenden Drehzahlverhältnis laufen.

3. Verfahren nach Anspruch 1 oder 2, dadurch gekennzeichnet, daß die Drehzahländerungen der Motoren (20′, 21′, 106′, 107′) der Dosierschnecken (18′, 19′, 104′, 105′) mit im wesentlichen konstanten Beschleunigungen erfolgen.

4. Verfahren nach einem der Ansprüche 1 bis 3, dadurch gekennzeichnet, daß zur Messung des Mischungsverhältnisses der Komponenten diese über eine vorbestimmte Meßzeit in Meßbehälter (32, 33, 116′, 117′) geleitet werden.

5. Verfahren nach einem der Ansprüche 1 bis 4, dadurch gekennzeichnet, daß etwa der mittlere Füllstand von einem Fühler (26) erfaßt wird, dessen Signal bei absinkendem Füllstand die zugeführte Menge pro Zeiteinheit der zu mischenden Komponenten mit stetiger Geschwindigkeitszunahme steigert und bei steigendem Füllstand mit stetiger Geschwindigkeitsabnahme vermindert.

6. Verfahren nach einem der Ansprüche 1 bis 5, dadurch gekennzeichnet, daß der Füllstand in dem Behälter oder Aufgabetrichter (101′) durch mehrere Fühler, die unterschiedlichen Füllhöhen zugeordnet sind, erfaßt wird und daß die Signale der Fühler in entsprechend abgestufter Form die Drehzahlen der Motoren (20′, 21′, 106′, 107′) der Dosierschnecken (18′, 19′, 104′, 105′) ändern.

7. Verfahren nach einem der Ansprüche 1 bis 4, dadurch gekennzeichnet, daß die Zeiten der Füllstandsänderungen zwischen einem oberen und einem unteren Niveau und umgekehrt gemessen und aus diesen Zeiten die Drehzahlen der Motoren der Dosierschnecken zur Einhaltung des mittleren Füllstandes errechnet werden.

8. Verfahren nach einem der vorhergehenden Ansprüche, dadurch gekennzeichnet, daß die Drehzahlen der Motoren (20′, 21′, 106′, 107′) der Dosierschnecken (18′, 19′, 104′, 105′) proportional zu der Drehzahl der Extruderschnecke geändert werden.

9. Verfahren nach einem der Ansprüche 1 bis 8, dadurch gekennzeichnet, daß neben der kontinuierlich zugeführten Komponente oder den kontinuierlich zugeführten Randstreifen mindestens zwei weitere Komponenten mit konstantem Mischungsverhältnis in veränderlicher Menge pro Zeiteinheit zugeführt werden.

## Claims

1. A method for controlling the filling level of a mixture consisting of at least two components of a pourable and/or fluid material in a container (12′, 101′) provided with an outlet (13′, 108′), for controlling the filling level in the feeder container (12′, 101′) of an extruder (1′, 110′), wherein the filling level is detected by at least one sensor device (26, 28, 29) which controls the quantity fed per unit time of at least one component,
**characterized in that**
at least one component is fed to the container or feeder hopper (12′, 101′) by means of a metering screw (18′, 19′, 104′, 105′) drawing it from a special stock container (16′, 17′, 102′, 103′), whose motor (20′, 21′, 106′, 107′) is controlled on the basis of the signals or the sensor device or sensor devices (26, 28, 29) in such a way that the filling level in the feeder hopper (12′, 101′) corresponds to the mean filling level, or that in the case of deviations from this mean filling level, the filling level is again restored to the mean filling level with as few changes in the rotational speeds of the motor (20′, 21′, 106′, 107′) as possible, and
that at least one component is fed substantially continuously to the container (12′, 101′), or that cut up edge strips of an extruded flat sheet separated off by trimming cuts are continuously fed to the feeder hopper of the extruder.

2. A method according to claim 1, characterized in that at least two components are fed to the container or feeder hopper (12′, 101′) by means of metering screws (18′, 19′, 104′, 105′) drawing these off from their stock containers, whose motors (20′, 21′, 106′, 107′) run at all rotational speeds altered according to the filling level with a fixed rotational speed ratio that corresponds to the mixture ratio.

3. A method according to claim 1 or 2, characterized in that the changes in the rotational speeds of the motors (20′, 21′, 106′, 107′) of the metering screws (18′, 19′, 104′, 105′) are effected with substantially constant accelerations.

4. A method according to one of claims 1 to 3, characterized in that for measuring the mixture ratio of the components, the latter are passed over a predetermined metering period into metering containers (32, 33, 116′, 117′).

5. A method according to one of claims 1 to 4, characterized in that it is approximately the mean filling level that is detected by a sensor (26), whose signal increases the fed quantity of the components to be mixed per unit time, with a constant increase in speed if the filling level is decreasing, and reduces it with a constant decrease in speed if the filling level is increasing.

6. A method according to one of claims 1 to 5, characterized in that the filling level in the container or feeder hopper (101′) is detected by several sensors assigned to different filling heights, and that the signals of the sensors alter the rotational speeds of the motors (20′, 21′, 106′, 107′) of the metering screws (18′, 19′, 104′, 105′) in a suitably stepped manner.

7. A method according to one of claims 1 to 4, characterized in that the periods of changes in the filling level between an upper and lower level and vice versa are measured, and that the rotational speeds of the motors of the metering screws are calculated from these periods so as to maintain the mean filling level.

8. A method according to one of the preceding claims, characterized in that the rotational speeds of the motors (20′, 21′, 106′, 107′) of the metering screws (18′, 19′, 104′, 105′) are altered proportionately to the rotational speed of the extruder screw.

9. A method according to one of claims 1 to 8, characterized in that apart from the continuously fed component or the continuously fed edge strips, at least two further components are fed with a constant mixture ratio in a changeable quantity per unit time.

## Revendications

1. Procédé pour la régulation du niveau de remplissage d'un mélange se composant d'au moins deux composants et formé par un matériau coulant dans un réservoir (12′, 101′) pourvu d'un moyen d'extraction (13′, 108′), pour la régulation du niveau de remplissage dans le réservoir d'alimentation (12′, 101′) d'une extrudeuse (1′, 110′), dans lequel le niveau de remplissage est détecté par au moins un dispositif capteur (26, 28, 29) qui commande la quantité ajoutée par unité de temps d'au moins un composant,
caractérisé en ce que,
au moins un composant est amené au réservoir ou trémis d'alimentation (12′, 101′) par une vis sans fin de dosage (18′, 19′, 104′, 101′) extrayant celui-ci d'un réservoir de stockage particulier (16′, 17′, 102′, 103′) et dont le moteur (20′, 21′, 106′, 107′) est commandé en fonction des signaux du dispositif capteur ou des dispositifs capteurs (26, 28, 29) de telle façon que le niveau de remplissage dans la trémis d'alimentation (12, 101′) corresponde au niveau de remplissage moyen ou que le niveau de remplissage, lors d'un écart de ce niveau de remplissage moyen soit ramené à nouveau à ce niveau de remplissage moyen, à des nombres de tours de variation les plus faibles possible du moteur (20′, 21′, 106′, 107′), et
au moins un composant est amené au réservoir (12′, 101′), de façon sensiblement continue ou des rubans latéraux séparés continuellement par des découpes de bordure et hâchés d'une feuille plate extrudée sont amenés au trémis d'alimentation de l'extrudeuse.

2. Procédé selon la revendication 1, caractérisé en ce qu'au réservoir ou trémis d'alimentation (12′, 101′) au moins deux composants sont amenés par des vis sans fin de dosage (18′, 19′, 104′, 105′) extrayant ceux-ci de leurs réservoirs de stockage et dont les moteurs (20′, 21′, 106′, 107′) tournent, à tous les nombres de tours modifiés en fonction du niveau de remplissage, selon un rapport des nombres de tours fixe, correspondant au rapport de mélange.

3. Procédé selon la revendication 1 ou 2, caractérisé en ce que les variations des nombres de tours des moteurs (20′, 21′, 106′, 107′) des vis de dosage sans fin (18′, 19′, 104′, 105′) sont effectués à des accélérations sensiblement constantes.

4. Procédé selon l'une des revendications 1 à 3, caractérisé en ce que, pour la mesure des rapports de mélange des composants, ceux-ci sont amenés dans des réservoirs de mesure (32, 33, 116′, 117′), pendant une durée de temps de mesure prédéterminée.

5. Procédé selon l'une des revendications 1 à 4, caractérisé en ce qu'approximativement le niveau de remplissage moyen est détecté par un capteur (26) dont le signal augmente, lors d'un niveau de remplissage descendant, la quantité amenée par unité de temps du composant à mélanger avec une augmentation de vitesse continue et diminue cette quantité avec une diminution de vitesse continue, lorsque le niveau de remplissage augmente.

6. Procédé selon l'une des revendications 1 à 5, caractérisé en ce que le niveau de remplissage dans le réservoir ou la trémis d'alimentation (101′) est détectée par plusieurs capteurs associés à différentes hauteurs de remplissage et que les signaux des capteurs modifient d'une façon échelonnée en conséquence les nombres de tours des moteurs (20′, 21′, 106′, 107′) des vis de dosage sans fin (18′, 19′, 104′, 105′).

7. Procédé selon l'une des revendications 1 à 4, caractérisé en ce que les temps de variation des niveaux de remplissage sont mesurés entre un niveau supérieur et un niveau inférieur ou inversement et que l'on calcule à partir de ces temps les nombres de tours des moteurs des vis de dosage sans fin pour la conservation ou le maintien du niveau de remplissage moyen.

8. Procédé selon l'une des revendications précédentes, caractérisé en ce que les nombres de tours du moteur (20′, 21′, 106′, 107′) des vis de dosage sans fin (18′, 19′, 104′, 105′) sont modifiés proportionnellement au nombre de tours de la vis sans fin de l'extrudeuse.

9. Procédé selon l'une des revendications 1 à 8, caractérisé en ce que, supplémentairement aux composants amenés de façon continue ou aux rubans latéraux amenés de façon continue, au moins deux autres composants sont amenés en une quantité variable par unité de temps, selon un rapport de mélange constant.
